# EUROPEAN PATENT APPLICATION

(11) **EP 3 795 279 A1**
(43) Date of publication of application: **24.03.2021**
(21) Application number: 19803281.5
(22) Date of filing: 24.04.2019
(51) Int. Cl.: B22F 3/16, B22F 3/105, B29C 64/153, B29C 64/295, B29C 64/371, B33Y 10/00, B33Y 30/00, B33Y 40/00

(54) **THREE-DIMENSIONAL SHAPING DEVICE AND THREE-DIMENSIONAL SHAPING METHOD**

(30) Priority: 18.05.2018 JP 2018096300
(71) Applicant: IHI CORPORATION, Koto-ku, Tokyo 135-8710 (JP)
(72) Inventor: SHIMIZU Riku, Tokyo 135-8710 (JP)
(74) Representative: Grünecker Patent- und Rechtsanwälte PartG mbB
(86) International application number: PCT/JP2019/017491
(87) International publication number: WO 2019/220901

(57) **Abstract**

A three-dimensional fabrication device irradiates a powder material, which is disposed inside a chamber, with an electron beam to heat the powder material and to thus fabricate a three-dimensional object, and includes a beam emission unit that emits the electron beam to irradiate the powder material with the electron beam, a gas supply unit that supplies an inert gas into the chamber, and a heating unit that heats the inert gas to be supplied into the chamber.

## Description

### Technical Field

The present disclosure relates to a three-dimensional fabrication device and a three-dimensional fabrication method that fabricate a three-dimensional object.

### Background Art

In the related art, as a three-dimensional fabrication device and a three-dimensional fabrication method, for example, as described in Japanese Patent No. 6101707, there are known a device and a method by which a powder material that is leveled inside a chamber is irradiated with an electron beam, so that the powder material is melt to be solidified and thus a three-dimensional object is fabricated. By the way, in such a device and a method that fabricate the three-dimensional object, there may occur the smoke phenomenon where the powder material is charged by irradiation of the electron beam and the powder material flies off in a mist state due to the charge. In the device and the method, an inert gas is supplied into the chamber to suppress the smoke phenomenon from occurring. In addition, for example, as a three-dimensional fabrication device and a three-dimensional fabrication method that use laser, as described in Japanese Patent No. 6132962, there are also known a device and a method by which a powder material is irradiated with laser to fabricate a three-dimensional object. In the device and the method, an inert gas is injected into a chamber, in which the powder material is disposed, to prevent oxidation of the powder material.

### Citation List

### Patent Literature

Patent Literature 1: Japanese Patent No. 6101707
Patent Literature 2: Japanese Patent No. 6132962

### Summary of Invention

### Technical Problem

However, the three-dimensional object may not be appropriately fabricated due to supply of the inert gas into the chamber. Namely, the inert gas injected into the chamber may cause a distortion of the object fabricated. The object which is irradiated with the beam inside the chamber is in a high temperature state, but the object is cooled to be warped due to exposure to the inert gas, so that the object having a desired shape cannot be fabricated, which is a problem.

Therefore, it is desired to develop a three-dimensional fabrication device and a three-dimensional fabrication method capable of appropriately fabricating an object even when an inert gas is supplied.

### Solution to Problem

According to one aspect of the present disclosure, there is provided a three-dimensional fabrication device that irradiates a powder material, which is disposed inside a chamber, with an energy beam to heat the powder material and to thus fabricate a three-dimensional object, the device including: a beam emission unit that emits the energy beam to irradiate the powder material with the energy beam; a gas supply unit that supplies an inert gas into the chamber; a heating unit that heats the inert gas to be supplied into the chamber; and a heating control unit that sets a heating temperature of the inert gas according to a melting temperature of the powder material.

### Effects of Invention

According to the present disclosure, even when the inert gas is supplied into the chamber, the object can be appropriately fabricated.

### Brief Description of Drawings

FIG. 1 is a schematic configuration view of a three-dimensional fabrication device according to an embodiment of the present disclosure.
FIG. 2 is a view describing operation of the three-dimensional fabrication device and a three-dimensional fabrication method according to the embodiment.
FIG. 3 is a flowchart illustrating operation of the three-dimensional fabrication device and the three-dimensional fabrication method according to the embodiment of the present disclosure.

### Description of Embodiments

The outline of an embodiment of the present disclosure is as follows. According to one aspect of the present disclosure, there is provided a three-dimensional fabrication device that irradiates a powder material, which is disposed inside a chamber, with an energy beam to heat the powder material and to thus fabricate a three-dimensional object, the device including: a beam emission unit that emits the energy beam to irradiate the powder material with the energy beam; a gas supply unit that supplies an inert gas into the chamber; a heating unit that heats the inert gas to be supplied into the chamber; and a heating control unit that sets a heating temperature of the inert gas according to a melting temperature of the powder material. According to the three-dimensional fabrication device, since the inert gas heated is supplied into the chamber, the supply of the inert gas is suppressed from causing a decrease in temperature of the object that is at a high temperature due to irradiation of the energy beam. For this reason, a distortion of the object to be fabricated can be suppressed from occurring.

In addition, in the three-dimensional fabrication device according to one aspect of the present disclosure described above, the energy beam may be an electron beam.

According to one aspect of the present disclosure, there is provided a three-dimensional fabrication method by which a powder material disposed inside a chamber is irradiated with an energy beam to heat the powder material and to thus fabricate a three-dimensional object, the method including: a heating step of setting a heating temperature of an inert gas according to a melting temperature of the powder material to heat the inert gas; a supply step of supplying the inert gas heated into the chamber; and a fabrication step of irradiating the powder material with the energy beam to fabricate the object. According to the three-dimensional fabrication method, since the inert gas heated is supplied into the chamber, the supply of the inert gas is suppressed from causing a decrease in temperature of the object that is at a high temperature due to irradiation of the energy beam. For this reason, a distortion of the object to be fabricated can be suppressed from occurring.

Hereinafter, an embodiment of the present disclosure will be described with reference to the drawings. Incidentally, in the description of the drawings, the same components are denoted by the same reference signs and duplicated descriptions will be omitted.

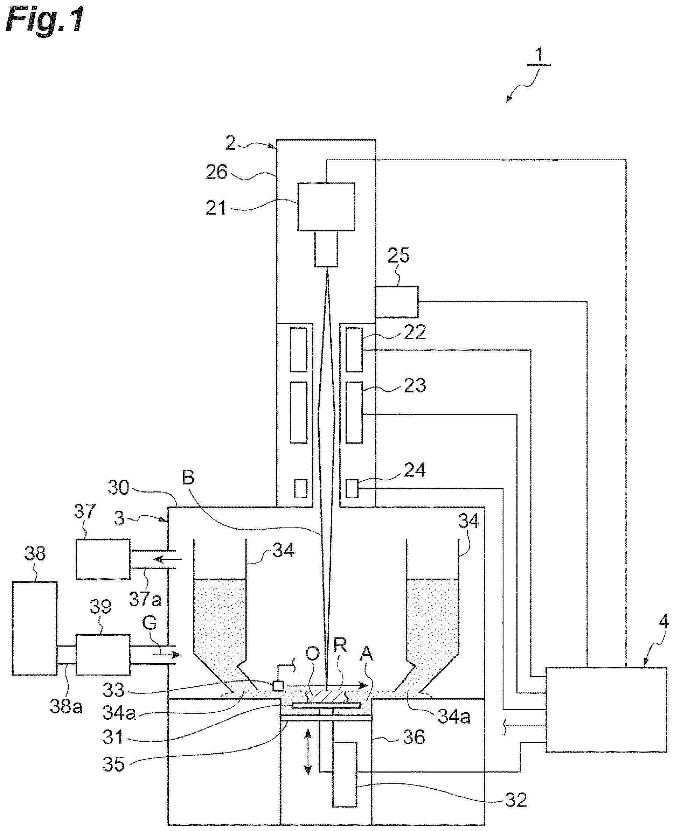

FIG. 1 is a schematic configuration view of a three-dimensional fabrication device according to the embodiment of the present disclosure. A three-dimensional fabrication device 1 is a device that irradiates a powder material A with an electron beam B to heat the powder material A and to thus fabricate a three-dimensional object O. The three-dimensional fabrication device 1 repeats, for example, a step of irradiating the powder material A with the electron beam B to preheat the powder material A, and a step of irradiating the powder material A with the electron beam B to heat and melt the powder material A and to thus fabricate a part of the object O. Then, the three-dimensional fabrication device 1 stacks the solidified powder material to fabricate the object O. The preheating refers to heating beforehand, and is a process of heating the powder material A at a temperature less than the melting point of the powder material A before fabrication of the object O. The powder material A is heated to be temporarily sintered by the preheating. For this reason, the accumulation of negative charges on the powder material A by irradiation of the electron beam B is suppressed, and the smoke phenomenon where the powder material A scatters and flies off when irradiated with the electron beam B can be suppressed.

The three-dimensional fabrication device 1 includes a beam emission unit 2, a fabrication unit 3, and a control unit 4. The beam emission unit 2 irradiates the powder material A of the fabrication unit 3 with the electron beam B to melt the powder material A. The electron beam B is a charged particle beam formed by linear motion of electrons which are charged particles. In addition, the beam emission unit 2 irradiates the powder material A with the electron beam B to preheat the powder material A, and then irradiates the powder material A with the electron beam B to melt the powder material A and to thus fabricate the three-dimensional object O.

The beam emission unit 2 includes an electron gun unit 21, an aberration coil 22, a focus coil 23, a deflection coil 24, and a scatter detector 25. The electron gun unit 21 is electrically connected to the control unit 4, and receives a control signal from the control unit 4 to operate to emit the electron beam B. For example, the electron gun unit 21 is provided to emit the electron beam B downward. The aberration coil 22 is electrically connected to the control unit 4, and receives a control signal from the control unit 4 to operate. The aberration coil 22 is installed around the electron beam B emitted from the electron gun unit 21, and corrects an aberration of the electron beam B. The focus coil 23 is electrically connected to the control unit 4, and receives a control signal from the control unit 4 to operate. The focus coil 23 is installed around the electron beam B emitted from the electron gun unit 21, and converges the electron beam B to adjust a focus state at the irradiation position of the electron beam B. The deflection coil 24 is electrically connected to the control unit 4, and receives a control signal from the control unit 4 to operate. The deflection coil 24 is installed around the electron beam B emitted from the electron gun unit 21, and adjusts the irradiation position of the electron beam B according to the control signal. Since the deflection coil 24 performs electromagnetic beam deflection, the scanning speed during irradiation of the electron beam B can be further increased than that in mechanical beam deflection. The electron gun unit 21, the aberration coil 22, the focus coil 23, and the deflection coil 24 are installed inside a column 26 having, for example, a cylindrical shape. Incidentally, there is also a case where the installation of the aberration coil 22 is omitted.

The scatter detector 25 is a device that detects scattering of the powder material A caused by irradiation of the powder material A with the electron beam B. Namely, the scatter detector 25 detects the smoke phenomenon where the powder material A scatters and flies off in a mist state when the powder material A is irradiated with the electron beam B. For example, an X-ray detector is used as the scatter detector 25. In this case, the scatter detector 25 can detect X-rays generated when smoke is generated, and can detect scattering of the powder material A by detection of the X-rays. For example, the scatter detector 25 is attached to the column 26, and is disposed toward the electron beam B. Incidentally, there is also a case where the scatter detector 25 is provided at a position in the vicinity of an irradiation region of the powder material A. In addition, there is also a case where a three-dimensional fabrication device not including the scatter detector 25 is used as the three-dimensional fabrication device 1.

The fabrication unit 3 is a section that fabricates a desired object O, and the powder material A is placed inside a chamber 30. The fabrication unit 3 is provided below the beam emission unit 2. The fabrication unit 3 includes the chamber 30 having a box shape, and includes a plate 31, an elevator 32, a powder supply mechanism 33, and a hopper 34 inside the chamber 30. The chamber 30 is joined to the column 26, and the internal space of the chamber 30 communicates with the internal space of the column 26 in which the electron gun unit 21 is disposed.

The plate 31 is a member that supports the object O to be fabricated. The object O is fabricated on the plate 31, and the plate 31 supports the object O to be fabricated. For example, a circular plate-shaped member is used as the plate 31. The plate 31 is disposed on the extension line of an emission direction of the electron beam B, and is provided, for example, in a horizontal direction. The plate 31 is disposed to be supported on an elevating stage 35, which is disposed therebelow, to move together with the elevating stage 35 in an upward and downward direction. The elevator 32 is a device that raises and lowers the elevating stage 35 and the plate 31. The elevator 32 is electrically connected to the control unit 4, and receives a control signal from the control unit 4 to operate. For example, the elevator 32 moves the plate 31 together with the elevating stage 35 upward at the initial stage of fabrication of the object O, and lowers the plate 31 as the powder material A on the plate 31 is melted and solidified to be stacked. Any mechanism may be used as the elevator 32 as long as the mechanism can raise and lower the plate 31.

The plate 31 is disposed inside a fabrication tank 36. The fabrication tank 36 is installed in a lower portion of the chamber 30. The fabrication tank 36 is formed, for example, in a cylindrical shape, and extends in a movement direction of the plate 31. The fabrication tank 36 is formed to have a circular cross section concentric with the plate 31. The elevating stage 35 is formed in conformance to the inner shape of the fabrication tank 36. Namely, when the inner shape of the fabrication tank 36 is a circular shape in horizontal cross section, the outer shape of the elevating stage 35 is also a circular shape. Accordingly, the powder material A supplied to the fabrication tank 36 is easily suppressed from leaking downward from the elevating stage 35. In addition, in order to suppress the powder material A from leaking downward from the elevating stage 35, a seal member may be provided in an outer edge portion of the elevating stage 35. Incidentally, the shape of the fabrication tank 36 is not limited to a cylindrical shape, and may be a rectangular cylinder shape having a rectangular cross section.

The powder supply mechanism 33 is a member that supplies the powder material A onto the plate 31 to level the surface of the powder material A, and serves as a recoater. For example, the powder supply mechanism 33 may be a member having a bar shape or a plate shape, and moves in the horizontal direction to supply the powder material A to a region of irradiation of the electron beam B and to then level the surface of the powder material A and to thus form a powder bed. The movement of the powder supply mechanism 33 is controlled by an actuator and a mechanism which is not illustrated. Incidentally, a mechanism other than the powder supply mechanism 33 can be used as the mechanism that levels the powder material A. The hopper 34 is a container that contains the powder material A. A discharge port 34a which discharges the powder material A is formed in a lower portion of the hopper 34. The powder material A discharged from the discharge port 34a flows onto the plate 31 or is supplied onto the plate 31 by the powder supply mechanism 33. The plate 31, the elevator 32, the powder supply mechanism 33, and the hopper 34 are installed inside the chamber 30. The inside of the chamber 30 is in a vacuum or substantially vacuum state. Incidentally, a mechanism other than the powder supply mechanism 33 and the hopper 34 can be used as the mechanism that supplies the powder material A in layers onto the plate 31.

The powder material A includes a large number of powder bodies. For example, metal powder is used as the powder material A. In addition, granules having a grain size larger than that of the powder may be used as the powder material A as long as the granules can be melted and solidified by irradiation of the electron beam B.

A pump 37 is connected to the chamber 30. The pump 37 is a pump that discharges air inside the chamber 30, and serves as a so-called vacuum pump. Any type of pump may be used as the pump 37 as long as the pump can create an atmospheric state to the extent that the irradiation of the electron beam B can be appropriately performed. The pump 37 is joined to the chamber 30 via a pipe 37a. Air inside the chamber 30 is discharged outside the chamber 30 through the pipe 37a by operation of the pump 37.

A gas supply unit 38 is connected to the chamber 30. The gas supply unit 38 supplies an inert gas G into the chamber 30. The gas supply unit 38 is, for example, a container that contains the inert gas G, and opens a valve or the like to discharge the inert gas G to supply the inert gas G into the chamber 30. The gas supply unit 38 is connected to the chamber 30 via a pipe 38a to supply a required amount of the inert gas G into the chamber 30. For example, argon is used as the inert gas G. In addition, the inert gas G may be a gas other than argon, for example, helium, carbon dioxide, nitrogen, neon or the like.

The three-dimensional fabrication device 1 includes a heating unit 39. The heating unit 39 heats the inert gas G to be supplied into the chamber 30. The heating unit 39 is provided, for example, in the pipe 38a between the gas supply unit 38 and the chamber 30 to heat the inert gas G discharged from the gas supply unit 38. For example, an electric heater type is used as the heating unit 39. Specifically, an electric resistance heating wire is used as the heating unit 39. In this case, a current flowing through the electric resistance heating wire can be adjusted to accurately and easily control the heating temperature. The heating temperature of the inert gas G in the heating unit 39 is set to, for example, the temperature of the powder material A or the object O during fabrication ± 300 degrees. Preferably, the heating temperature of the inert gas G in the heating unit 39 is set to the temperature of the powder material A or the object O during fabrication ± 200 degrees. Further, more preferably, the heating temperature of the inert gas G in the heating unit 39 is set to the temperature of the powder material A or the object O during fabrication ± 100 degrees.

The heating temperature may be set according to the melting temperature of the powder material A. Namely, the temperature of the inert gas G may be set to the same temperature as the temperature of the object O or the powder material A during fabrication or may be set to a temperature corresponding thereto. Since the inert gas G is heated to be supplied into the chamber 30, even when the inert gas G is supplied to the positions of the object O and the powder material A during fabrication, the inert gas G is suppressed from causing a rapid decrease in temperature of the object O and the powder material A. Namely, the temperature gradient in the object O and the powder material A can be reduced. For this reason, a warp of the object O to be fabricated or a distortion of the object O is suppressed from occurring. In addition, when the inert gas G heated to the temperature of the object O or the powder material A during fabrication or more is supplied into the chamber 30, the object O and the powder material A can be heated by the inert gas G without a rapid decrease in temperature of the object O and the powder material A caused by the inert gas G.

In addition, the temperature of the object O or the powder material A during fabrication may be detected to control heating of the heating unit 39 according to the temperature of the object O or the powder material A. In this case, the temperature of the object O or the powder material A during fabrication may be detected by thermography using a camera that detects infrared rays. In addition, radiation temperature measurement using two colors (two-color temperature measurement method) or radiation temperature measurement using multiple colors which uses different measurement wavelengths to obtain temperature may be used. In addition, temperature at a position (for example, the elevating stage 35) in the vicinity of the object O or the powder material A may be measured to calculate the temperature of the object O or the powder material A based on the temperature. As described above, the heating of the heating unit 39 is controlled according to the temperature of the object O or the powder material A to appropriately heat the inert gas G; and thereby, the object O to be fabricated is accurately suppressed from being distorted.

Incidentally, a type other than the electric resistance heating wire may be used as the heating unit 39. For example, a combustion type may be used as the heating unit 39. Specifically, a gas heater may be used as the heating unit 39. More specifically, a combustion gas is delivered to a pipe to be burned inside the pipe, so that the combustion can be stably performed in the closed pipe to efficiently perform heating. In addition, the heating unit 39 may be an electromagnetic induction type or a heater using radiation.

The control unit 4 is an electronic control unit that controls the entirety of the three-dimensional fabrication device 1, and includes, for example, a computer including a CPU, a ROM, and a RAM. The control unit 4 performs control of elevation of the plate 31, control of operation of the powder supply mechanism 33, control of emission of the electron beam B, control of operation of the deflection coil 24, detection of scattering of the powder material A, control of operation of the pump 37, control of operation of the gas supply unit 38, and control of operation of the heating unit 39. As the control of operation of the plate 31, the control unit 4 outputs a control signal to the elevator 32 to cause the elevator 32 to operate to adjust the upward and downward position of the plate 31. As the control of operation of the powder supply mechanism 33, the control unit 4 causes the powder supply mechanism 33 to operate before emission of the electron beam B to supply the powder material A onto the plate 31 and to then level the powder material A. As the control of emission of the electron beam B, the control unit 4 outputs a control signal to the electron gun unit 21 to cause the electron beam B to emit the electron gun unit 21.

As the control of operation of the deflection coil 24, the control unit 4 outputs a control signal to the deflection coil 24 to cause the irradiation position of the electron beam B to be controlled. For example, when the powder material A is preheated, the control unit 4 outputs a control signal to the deflection coil 24 of the beam emission unit 2 to cause the plate 31 to be scanned and irradiated with the electron beam B. As the control of operation of the pump 37, the control unit 4 outputs a control signal to the pump 37 such that the inside of the chamber 30 is in a target atmospheric state; and thereby, the operation and stop of operation of the pump 37 is controlled. As the control of operation of the gas supply unit 38, the control unit 4 outputs a control signal to the gas supply unit 38 such that the inert gas G is supplied to the chamber 30 at a flow rate set in advance; and thereby, the operation and stop of operation of the gas supply unit 38 is controlled. As the control of operation of the heating unit 39, the control unit 4 outputs a control signal to the heating unit 39 such that the temperature of the inert gas G reaches a target heating temperature; and thereby, the operation state of the heating unit 39 is controlled.

When the object O is fabricated, the control unit 4 uses, for example, three-dimensional computer-aided design (CAD) data of the object O to be fabricated. The three-dimensional CAD data of the object O is shape data of the object O which is input in advance. The control unit 4 generates two-dimensional slice data based on the three-dimensional CAD data. The slice data is, for example, data of the horizontal cross section of the object O to be fabricated, and is a collection of a large number of data corresponding to upward and downward positions. The control unit 4 determines a region of the powder material A based on the slice data, the region being irradiated with the electron beam B, to output a control signal to the deflection coil 24 according to the region. Accordingly, the control unit 4 outputs a control signal to the deflection coil 24 of the beam emission unit 2 to cause a fabrication region R corresponding to the shape of the object to be irradiated with the electron beam B.

Next, the operation of the three-dimensional fabrication device 1 and a three-dimensional fabrication method according to the embodiment will be described.

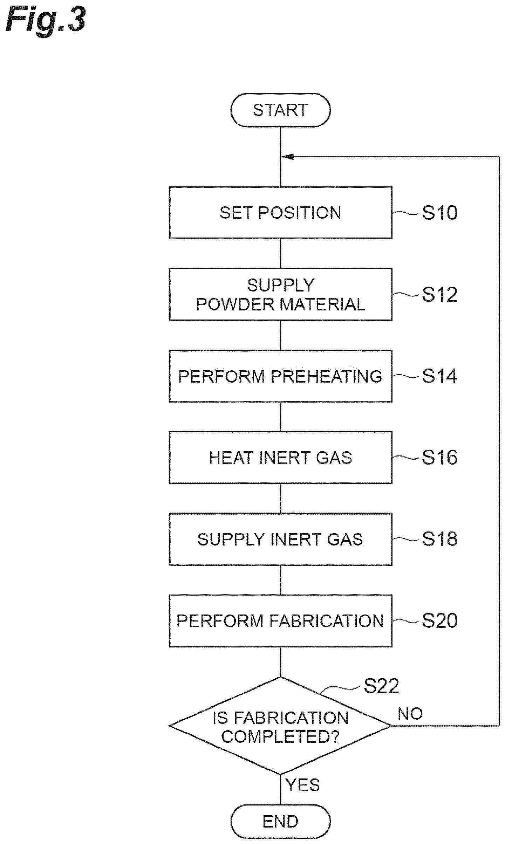

FIG. 3 is a flowchart illustrating the operation of the three-dimensional fabrication device 1 and the steps of the three-dimensional fabrication method. First, as illustrated in S10 of FIG. 3, the position of the plate 31 is set. In FIG. 1, the position of the plate 31 is set to an upper position at the initial stage of fabrication of the object O. The position of the plate 31 is gradually moved downward as the fabrication of the object O makes progress. The control unit 4 outputs an operation signal to the elevator 32 to cause the elevator 32 to operate to move the elevating stage 35 and the plate 31 and to thus set the position of the plate 31. Incidentally, at this time, the inside of the chamber 30 is brought into a vacuum state or a substantially vacuum state by operation of the pump 37.

Next, the powder material A is supplied (S12 of FIG. 3). The supply of the powder material A is a process of supplying the powder material A to a region of irradiation of the electron beam B to level the powder material A. For example, the control unit 4 outputs an operation signal to the actuator which is not illustrated, to cause the powder supply mechanism 33 to operate. Accordingly, the powder supply mechanism 33 moves in the horizontal direction to supply the powder material A onto the plate 31 and to then level the powder material A, so that a powder bed is formed.

Next, preheating is performed (S14). The preheating is a process of heating the powder material A in advance before the object O is fabricated. The control unit 4 outputs a control signal to the beam emission unit 2 to cause the electron gun unit 21 to emit the electron beam B and to cause the deflection coil 24 to operate to control the irradiation position of the electron beam B. Accordingly, the powder material A on the plate 31 is irradiated with the electron beam B to be heated.

Then, the heating of the inert gas G, the supply of the inert gas G, and the fabrication of the object O are performed (S16, S18, and S20). The steps of the heating of the inert gas G, the supply of the inert gas G, and the fabrication of the object O may be sequentially performed or may be simultaneously performed. For example, regarding the fabrication of the object O, the control unit 4 generates two-dimensional slice data based on three-dimensional CAD data of the object O to be fabricated. Then, the control unit 4 determines the fabrication region R of the powder material A based on the slice data, the fabrication region R being irradiated with the electron beam B to cause the beam emission unit 2 to emit the electron beam B according to the fabrication region R. Here, in the fabrication process, a part of layers forming the object O is fabricated. The object O is fabricated by stacking a plurality of the layers.

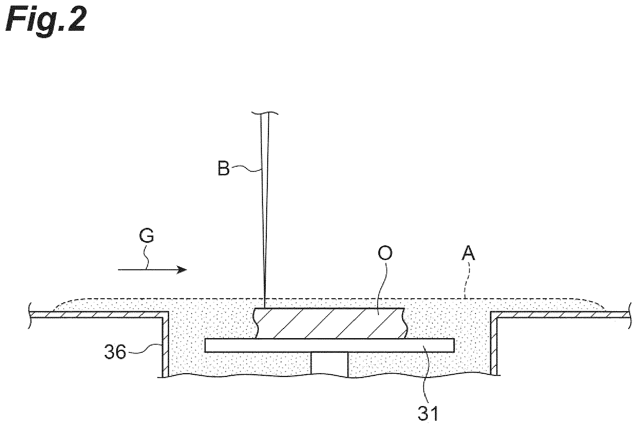

Here, the inert gas G is supplied when the preheating and the fabrication of the object O are performed. Namely, the control unit 4 outputs control signals to the gas supply unit 38 and the heating unit 39 to cause the gas supply unit 38 to discharge the inert gas G and to cause the heating unit 39 to heat the inert gas G. Accordingly, as illustrated in FIG. 2, the inert gas G heated is supplied into the chamber 30. At this time, since the inert gas G is supplied to the positions of the object O and the powder material A, the charge-up of the object O and the powder material A by irradiation of the electron beam B is suppressed. In addition, since the inert gas G is in a heated state, even when the inert gas G is supplied to the positions of the object O and the powder material A, a rapid decrease in temperature of the object O and the powder material A are suppressed. Therefore, the object O to be fabricated can be suppressed from being warped or distorted. Incidentally, the supply of the inert gas G is performed at least during fabrication of the object O, but may be performed at a time other than during preheating and during fabrication of the object O. For example, the inert gas G may be supplied in advance before the preheating and the fabrication of the object O are performed.

Then, it is determined whether or not the fabrication of the desired three-dimensional object O is completed (S22 of FIG. 3). When the fabrication of the desired three-dimensional object O is not completed, the setting of the position of the plate 31, the supply of the powder material A, the preheating, and the fabrication of the object O described above are repeated. Accordingly, the object O is gradually formed in layers, and finally, the desired object O is fabricated. Meanwhile, when the fabrication of the desired three-dimensional object O is completed, a series of the control processes of FIG. 3 are completed.

As described above, according to the three-dimensional fabrication device 1 and the three-dimensional fabrication method according to the present embodiment, since the inert gas G heated is supplied into the chamber 30 during fabrication of the object O, the supply of the inert gas is suppressed from causing a decrease in temperature of the object O that is at a high temperature due to irradiation of the electron beam B. For this reason, a distortion of the object O can be suppressed from occurring. In addition, the object O can be fabricated with good accuracy.

If the inert gas G which is not heated is supplied into the chamber 30 during fabrication of the object O, the object O which is at a high temperature due to irradiation of the electron beam B is rapidly cooled by supply of the inert gas, and the temperature of the object O is decreased. Accordingly, thermal contraction of the object O may cause the object O to be distorted, so that an end portion of the object O is warped, which is a problem. In contrast, in the three-dimensional fabrication device 1 and the three-dimensional fabrication method according to the present embodiment, since the inert gas G heated is supplied into the chamber 30, the supply of the inert gas is suppressed from causing a decrease in temperature of the object O. For this reason, a distortion of the object O can be suppressed from occurring, and the object O can be fabricated with good accuracy.

In addition, according to the three-dimensional fabrication device 1 and the three-dimensional fabrication method according to the present embodiment, since the inert gas G heated is supplied into the chamber 30 during fabrication of the object O, the supply of the inert gas is suppressed from causing a decrease in temperature of the powder material A that is at a high temperature due to irradiation of the electron beam B. For this reason, the smoke phenomenon caused by irradiation of the electron beam B can be suppressed.

Incidentally, the present disclosure is not limited to the above-described embodiment. The present disclosure can include various modified embodiments without departing from the concept of the claims.

For example, in the above-described embodiment, a case where the powder material A is irradiated with the electron beam B as an energy beam to fabricate the object O has been described; however, the irradiation of an energy beam other than the electron beam B may be performed. For example, the irradiation of a laser beam, a charged particle beam or the like may be performed to fabricate the object O.

When a laser beam is used as the energy beam, the inert gas is supplied into the chamber to bring the inside of the chamber into an inert gas atmosphere. In addition, when the powder material is heated by the laser beam to be sintered or melted, the powder material evaporates to generate fume. For this reason, the fume may be discharged together with the inert gas from the inside of the chamber, and a fresh inert gas may be supplied into the chamber. Since the fume is discharged from the chamber as described above, when a laser beam is used as an energy beam, the fume can be suppressed from affecting an optical system of the beam emission unit. As described above, even in the configuration where a laser beam is used as an energy beam and the inert gas is supplied into the chamber, the heating unit which heats the inert gas may be provided to heat the inert gas before introduction into the chamber, so that the inert gas in a heated state is supplied into the chamber. The inert gas may be a gas that does not practically react with the powder material. Even in such a three-dimensional fabrication device and a three-dimensional fabrication method, as in the three-dimensional fabrication device and the three-dimensional fabrication method according to the present embodiment described above, in the fabrication of the object, a distortion of the object can be suppressed from occurring, and the object can be fabricated with good accuracy.

### Industrial Applicability

According to the three-dimensional fabrication device and the three-dimensional fabrication method of the present disclosure, even when the inert gas is supplied into the chamber, the object can be appropriately fabricated.

### Reference Signs List

1: three-dimensional fabrication device, 2: beam emission unit, 3: fabrication unit, 4: control unit, 21: electron gun unit, 22: aberration coil, 23: focus coil, 24: deflection coil, 25: scatter detector, 30: chamber, 31: plate, 32: elevator, 33: powder supply mechanism, 34: hopper, 37: pump, 38: gas supply unit, 39: heating unit, A: powder material, B: electron beam, O: object, R: fabrication region.

## Claims

1. A three-dimensional fabrication device that irradiates a powder material, which is disposed inside a chamber, with an energy beam to heat the powder material and to thus fabricate a three-dimensional object, the device comprising:
a beam emission unit that emits the energy beam to irradiate the powder material with the energy beam;
a gas supply unit that supplies an inert gas into the chamber;
a heating unit that heats the inert gas to be supplied into the chamber; and
a heating control unit that sets a heating temperature of the inert gas according to a melting temperature of the powder material.

2. The three-dimensional fabrication device according to claim 1, wherein the energy beam is an electron beam.

3. A three-dimensional fabrication method by which a powder material disposed inside a chamber is irradiated with an energy beam to heat the powder material and to thus fabricate a three-dimensional object, the method comprising:
a heating step of setting a heating temperature of an inert gas according to a melting temperature of the powder material to heat the inert gas;
a supply step of supplying the inert gas heated into the chamber; and
a fabrication step of irradiating the powder material with the energy beam to fabricate the object.
